(19) Europäisches Patentamt
European Patent Office
Office européen des brevets

(11) Veröffentlichungsnummer: **0 365 482**
**A1**

(12) **EUROPÄISCHE PATENTANMELDUNG**

(21) Anmeldenummer: **89810776.8**

(22) Anmeldetag: **11.10.89**

(51) Int. Cl.[5]: **C09B 62/503 , C07C 317/36 , D06P 1/384**

(30) Priorität: **20.10.88 CH 3913/88**

(43) Veröffentlichungstag der Anmeldung: **25.04.90 Patentblatt 90/17**

(84) Benannte Vertragsstaaten: **BE CH DE FR GB IT LI**

(71) Anmelder: **CIBA-GEIGY AG**
**Klybeckstrasse 141**
**CH-4002 Basel(CH)**

(72) Erfinder: **Tzikas, Athanassios, Dr.**
**Unt. Rütschetenweg 36**
**CH-4133 Pratteln(CH)**

(54) **Reaktivfarbstoffe, deren Herstellung und Verwendung.**

(57) Verbindungen der Formel

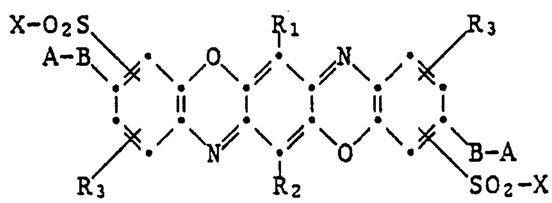

(1) ,

worin A, B, $R_1$, $R_2$, $R_3$ und X die im Anspruch 1 angegebene Bedeutung haben, eignen sich als Farbstoffe zum Färben und Bedrucken von cellulose-haltigen Fasermaterialien und ergeben Färbungen und Drucke mit guten Echtheitseigenschaften.

EP 0 365 482 A1

Xerox Copy Centre

## Reaktivfarbstoffe, deren Herstellung und Verwendung

Reaktivfarbstoffe werden seit langem in grossem Umfang für das Färben und Bedrucken von Textilien aus Fasermaterialien eingesetzt, und es steht heute eine grosse Anzahl von brauchbaren Reaktivfarbstoffen mit unterschiedlichen Eigenschaften und für verschiedene Anwendungsbereiche zur Verfügung. Angesichts der immer höheren Anforderungen an Reaktivfärbungen in bezug auf Wirtschaftlichkeit, Applikationstechnik und Echtheitsniveau ist der erreichte technische Stand aber vielfach nicht voll befriedigend.

So ist z.B. häufig festzustellen, dass der Fixiergrad zu gering, und die Differenz zwischen Ausziehgrad und Fixiergrad zu gross ist (hoher Seifverlust), so dass ein erheblicher Teil des Reaktivfarbstoffes für den Färbevorgang verloren geht. Ferner lässt das Aufbauvermögen in vielen Fällen zu wünschen übrig.

Der vorliegenden Erfindung lag die Aufgabe zugrunde, neue verbesserte Reaktivfarbstoffe zu finden, die eine hohe Reaktivität und ein gutes Aufbauvermögen besitzen, die mit hoher Fixierausbeute gefärbt werden können, die vor allem für das Ausziehfärbeverfahren geeignet sind, und die auf cellulosehaltigem Fasermaterial nass- und lichtechte Färbungen ergeben.

Es hat sich gezeigt, dass die weiter unten definierten neuen Reaktivfarbstoffe diesen Anforderungen genügen.

Gegenstand der Erfindung sind Verbindungen der Formel

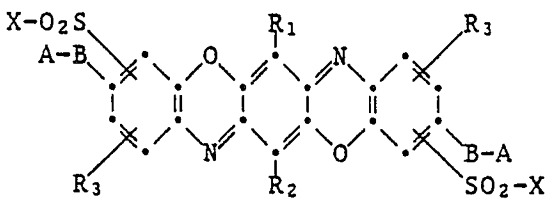
(1)

worin $R_1$, $R_2$ und $R_3$ unabhängig voneinander Wasserstoff oder ein Substituent sind, B eine direkte Bindung oder den Rest -O- bedeutet, X Hydroxy und A ein Rest der Formel

$-(CH_2)_m-SO_2-Z$ (2a),

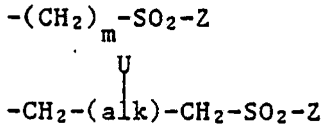
(2b),

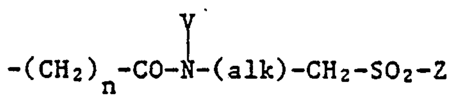
(2c),

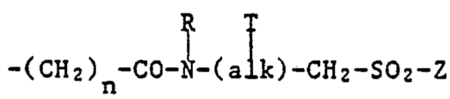
(2d),

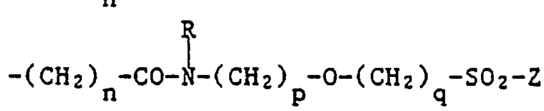
(2e),

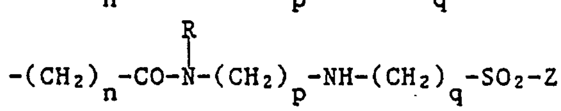
(2f),

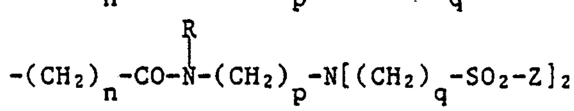
(2g) oder

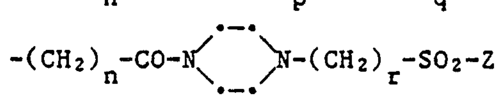
(2h),

worin U Hydroxy, Sulfato, Sulfo oder Halogen bedeutet, V Wasserstoff, gegebenenfalls substituiertes $C_1$-$C_4$-Alkyl oder ein Rest -(alk)-$CH_2$-$SO_2$-Z ist, (alk) für einen $C_1$-$C_6$-Alkylenrest steht, R Wasserstoff oder $C_1$-$C_6$-Alkyl bedeutet, T Wasserstoff, Halogen, Hydroxy, Sulfato, Carboxy, Cyano, $C_1$-$C_4$-Alkanoyloxy, $C_1$-$C_4$-

Alkoxycarbonyl oder ein Rest $-SO_2-Z$ ist, Z einen Rest der Formel $-CH=CH_2$ oder $-CH_2-CH_2-Y$ bedeutet, Y eine Abgangsgruppe darstellt, m eine ganze Zahl von 2 bis 6 bedeutet und n, p, q und r unabhängig voneinander eine ganze Zahl von 1 bis 6 darstellen, sind, oder X die oben angegebene Bedeutung von Z hat und A ein Rest der Formel

$$-(CH_2)_m-U' \quad (3a),$$

$$-CH_2-(\overset{\displaystyle U'}{\overset{|}{alk}})-CH_2-U' \quad (3b) \text{ oder}$$

$$-(CH_2)_n-CO-\overset{\displaystyle R_4}{\overset{|}{N}}-(CH_2)_m-U' \quad (3c),$$

worin $R_4$ Wasserstoff, $C_1$-$C_4$-Alkyl oder ein Rest $-(CH_2)_m-U'$ ist, $U'$ Hydroxy, Sulfo oder Sulfato bedeutet und (alk), n und m jeweils die zuvor angegebene Bedeutung haben, ist.

Bei den Resten $R_1$ und $R_2$ handelt es sich z.B. um Wasserstoff, Halogen wie Brom und insbesondere Chlor, $C_1$-$C_4$-Alkyl, worunter generell Methyl, Ethyl, n- oder iso-Propyl oder n-, sec.- oder tert.-Butyl zu verstehen ist, $C_1$-$C_4$ Alkoxy, welches generell Methoxy, Ethoxy, n- oder iso-Propoxy oder n-, iso- oder tert.-Butoxy umfasst, Phenoxy, Carboxy, Carbamoyl oder $C_1$-$C_4$-Alkanoylamino, z.B. Acetylamino. Vorzugsweise bedeuten $R_1$ und $R_2$ jeweils Wasserstoff Methyl, Methoxy, Acetylamino und besonders bevorzugt Chlor.

Der Rest $R_3$ hat z.B. die Bedeutung Wasserstoff, $C_1$-$C_4$-Alkyl, $C_1$-$C_4$-Alkoxy, Halogen, Carboxy, Carbamoyl, N-$C_1$-$C_4$-Alkyl- oder N,N-Di-$C_1$-$C_4$-Alkylcarbamoyl, $C_1$-$C_4$-Alkylsulfonyl, Sulfamoyl oder N-$C_1$-$C_4$-Alkyl- oder N,N-Di-$C_1$-$C_4$-Alkylsulfamoyl.

Vorzugsweise handelt es sich bei $R_3$ um Wasserstoff, Chlor, $C_1$-$C_4$-Alkyl oder $C_1$-$C_4$-Alkoxy und besonders bevorzugt um Wasserstoff.

Eine bevorzugte Ausführungsform der Erfindung betrifft Verbindungen der Formel (1) worin $R_1$ und $R_2$ jeweils Chlor und $R_3$ Wasserstoff sind.

B bedeutet vorzugsweise den Rest -O-.

U in der Formel (2a) bedeutet vorzugsweise Sulfato.

Ist V ein substituierter $C_1$-$C_4$-Alkylrest, so kann dies z.B. ein durch Halogen, Hydroxy, Cyano, Carboxy, Sulfo, Sulfato, $C_1$-$C_4$-Alkoxy oder $C_1$-$C_4$-Alkoxycarbonyl substituierter $C_1$-$C_4$-Alkylrest sein.

Beispiele für substituierte $C_1$-$C_4$-Alkylreste sind: Carboxymethyl, ß-Carboxyethyl, Methoxycarbonylmethyl, Ethoxycarbonylmethyl, ß-Carboxyethyl, Methoxycarbonylmethyl, Ethoxycarbonylmethyl, ß-Methoxyethyl, ß-Ethoxyethyl, ß-Chlorethyl, $\gamma$-Brompropyl, ß-Hydroxyethyl, ß-Hydroxybutyl, ß-Cyanethyl, Sulfomethyl, ß-Sulfoethyl, ß-Sulfatoethyl.

Steht V für einen Rest der Formel $Z-O_2S-H_2C$-(alk)-, so kann sich dieser von dem in Formel (2c) vorhandenen zweiten Rest $Z-O_2S-H_2C$-(alk)-unterscheiden oder, vorzugsweise, mit letzterem übereinstimmen.

V bedeutet vorzugsweise Wasserstoff, Methyl, Ethyl oder die Gruppe $Z-O_2S-H_2C$(alk)-; insbesondere bevorzugt ist für V die Bedeutung Wasserstoff.

(alk) in den Formeln (2b), (2c), (2d) und (3b) bedeutet z.B. einen Methylen-, Ethylen-, 1,3-Propylen-, 1,4-Butylen-, 1,5- Pentylen-oder 1,6-Hexylenrest oder deren verzweigte Isomere. Bevorzugt ist für (alk) die Bedeutung eines $C_1$-$C_4$-Alkylenrestes und insbesondere die Bedeutung Methylen oder Ethylen.

Steht R für einen $C_1$-$C_6$-Alkylrest, so kann dies z.B. ein Methyl-, Ethyl-, n- oder iso-Propyl-, n-, sec.- oder tert.-Butylrest oder ein geradkettiger oder verzweigter Pentyl- oder Hexylrest sein.

R bedeutet vorzugsweise Wasserstoff, Methyl oder Ethyl und besonders bevorzugt Wasserstoff.

T steht vorzugsweise für Wasserstoff, Hydroxy, Sulfato, Acetyloxy, Carboxy, Methoxycarbonyl, Ethoxycarbonyl oder die Gruppe $-SO_2-Z$; besonders bevorzugt ist T Wasserstoff oder ein Rest $-SO_2-Z$.

Beispiele für geeignete Abgangsgruppen Y sind:

$-OSO_3H$, $-SSO_3H$, $-OCOCH_3$, $-OCO-C_6H_5$, $OPO_3H_2$, -Cl, -Br, -F,

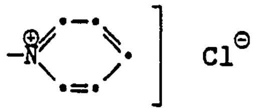 , 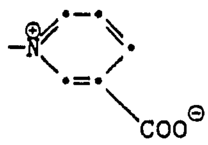 , 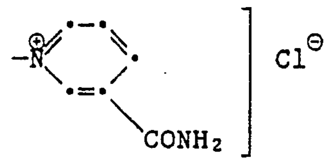

Vorzugsweise steht Y für die Gruppe $-OSO_3H$, $-SSO_3H$, $-OCOCH_3$, $-OPO_3H_2$ oder -Cl und besonders bevorzugt für die Gruppe $-OSO_3H$.
m bedeutet vorzugsweise eine ganze Zahl von 2 bis 5 und besonders bevorzugt die Zahl 3, 4 oder 5.
n stellt bevorzugt eine ganze Zahl von 1 bis 4 und besonders bevorzugt die Zahl 1 oder 2 dar.
p und q stehen unabhängig voneinander bevorzugt für eine ganze Zahl von 1 bis 4; besonders bevorzugt bedeuten p und q jeweils die Zahl 2.
r bedeutet vorzugsweise eine ganze Zahl von 1 bis 4 und vorzugsweise die Zahl 2 oder 3.

Steht X für Hydroxy, entspricht der Rest A vorzugsweise der Formel

$-(CH_2)_{2-5}-SO_2-Z'$ (2a'),

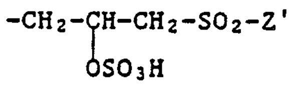 (2b'),

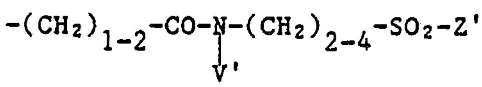 (2c'),

$-(CH_2)_{1-2}-CO-NH-CH_2-CH_2-O-CH_2-CH_2-SO_2-Z'$ (2e'),

$-(CH_2)_{1-2}-CO-NH-CH_2-CH_2-NH-CH_2-CH_2-SO_2-Z'$ (2f') oder

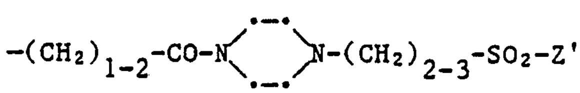 (2h'),

worin V′ Wasserstoff, Methyl, Ethyl oder einen Rest
$-(CH_2)_{2-4}-SO_2-Z'$
bedeutet, Z′ für $-CH=CH_2$ oder $-CH_2-CH_2-Y'$ steht und Y′ $-OSO_3H$, $-SSO_3H$, $-OCOCH_3$, $OPO_3H_2$ oder -Cl bedeutet.

Beispiele für besonders bevorzugte Reste A sind hierbei:
$-(CH_2)_2-SO_2-(CH_2)_2-OSO_3H$
$-(CH_2)_3-SO_2-(CH_2)_2-OSO_3H$
$-(CH_2)_4-SO_2-(CH_2)_2-OSO_3H$
$-(CH_2)_5$ $S-SO_2-(CH_2)_2-OSO_3H$
$-CH_2-CO-NH-(CH_2)_2-SO_2-(CH_2)_2-OSO_3H$ oder

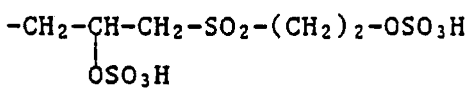

U′ hat vorzugsweise die Bedeutung Sulfato.
$R_4$ steht bevorzugt für Wasserstoff oder einen Rest $-(CH_2)_m-U'$, worin für U′ und m die zuvor genannten Bedeutungen und Bevorzugungen gelten.

Hat X die zuvor für Z angegebene Bedeutung, bedeutet A vorzugsweise einen Rest der Formel

$-(CH_2)_{2-4}-OSO_3H$ (3a'),

$-CH_2-(alk)-CH_2-OSO_3H$ (3b') oder
$\quad\quad\;\; |$
$\quad\quad OSO_3H$

$\quad\quad\quad\quad\quad\quad R_4'$
$\quad\quad\quad\quad\quad\quad |$
$-(CH_2)_{1-2}-CO-N-(CH_2)_{2-4}-OSO_3H$ (3c'),

worin (alk) Methylen oder Ethylen ist und $R_4'$ für Wasserstoff oder einen Rest $-(CH_2)_{2-4}-OSO_3H$ steht.

Beispiele für besonders bevorzugte Reste A sind hierbei:

$-CH_2-CH_2-OSO_3H$

$-CH_2-CH-CH_2-OSO_3H$
$\quad\quad\;\; |$
$\quad\quad OSO_3H$

$-CH_2-CO-NH-CH_2-CH_2-OSO_3H$

$-CH_2-CH_2-CO-NH-CH_2-CH_2-OSO_3H$

$-CH_2-CO-N\ (CH_2-CH_2-OSO_3H)_2.$

Eine bevorzugte Gruppe von erfindungsgemässen Farbstoffen umfasst Verbindungen der Formel (1), worin $R_1$ und $R_2$ jeweils Chlor und $R_3$ Wasserstoff sind, X für Hydroxy steht, B den Rest -O- darstellt und A einen Rest der zuvor angegebenen Formel (2a'), (2b'), (2c'), (2e'), (2f') oder (2h') bedeutet.

Besonders bevorzugt sind hierbei Verbindungen der Formel (1), worin $R_1$ und $R_2$ je Chlor, $R_3$ Wasserstoff, X Hydroxy, B -O- und A einen Rest

$-(CH_2)_2-SO_2-(CH_2)_2-OSO_3H,$

$-(CH_2)_3-SO_2-(CH_2)_2-OSO_3H,$

$-(CH_2)_4-SO_2-(CH_2)_2-OSO_3H,$

$-(CH_2)_5-SO_2-(CH_2)_2-OSO_3H,$

$-CH_2-CO-NH-(CH_2)_2-SO_2-(CH_2)_2-OSO_3H$ oder

$-CH_2-CH-CH_2-SO_2-(CH_2)_2-OSO_3H$
$\quad\quad\;\; |$
$\quad\quad OSO_3H$

bedeuten.

Eine weitere Gruppe von bevorzugten Farbstoffen umfasst Verbindungen der Formel (1), worin $R_1$ und $R_2$ je Chlor und $R_3$ Wasserstoff bedeuten, X $-CH=CH_2$ oder $-CH_2-CH_2-Y'$, worin Y' die zuvor angegebene Bedeutung hat, ist, B den Rest -O- bedeutet und A einen Rest der zuvor angegebenen Formel (3a'), (3b') oder (3c') darstellt.

Besonders bevorzugt sind hierbei Verbindungen der Formel (1), worin $R_1$ und $R_2$ je Chlor, $R_3$ Wasserstoff, X $-CH_2-CH_2-OSO_3H$, B -O- und A einen Rest

$-CH_2-CH_2-OSO_3H$,

$-CH_2-CH(OSO_3H)-CH_2-OSO_3H$,

$-CH_2-CO-NH-CH_2-CH_2-OSO_3H$,

$-CH_2-CH_2-CO-NH-CH_2-CH_2-OSO_3H$ oder

$-CH_2-CO-N\ (CH_2-CH_2-OSO_3H)_2$

bedeuten.

Die Verbindungen der Formel (1) können in an sich bekannter Weise erhalten werden, z.B. indem man ein Amin der Formel

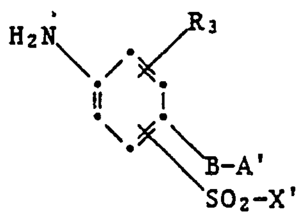

(4),

worin $R_3$ und B die zuvor angegebene Bedeutung haben, A′ die zuvor angegebene Bedeutung von A hat oder für einen Rest der zuvor angegebenen Formel (2a) bis (2h), worin Z $-CH_2-CH_2-OH$ ist, steht und X′ die zuvor angegebene Bedeutung von X hat oder für den Rest $-CH_2-CH_2-OH$ steht, mit einem 1,4-Benzochinon der Formel

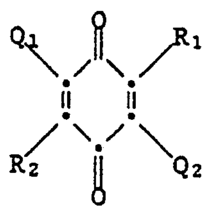

(5),

worin $R_1$ und $R_2$ die zuvor angegebene Bedeutung haben und $Q_1$ und $Q_2$ jeweils Wasserstoff, Chlor, Brom, $C_1$-$C_4$-Alkoxy oder Phenoxy bedeuten, zu einer Verbindung der Formel

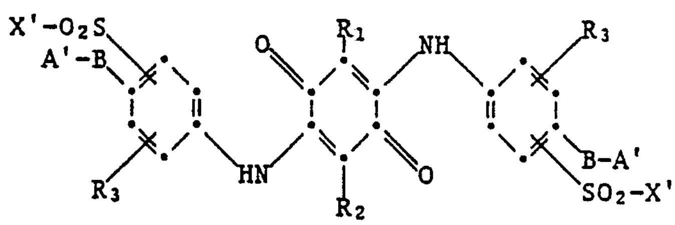

(6)

kondensiert, die erhaltene Anilverbindung durch nachfolgenden Ringschluss zur Dioxazinverbindung reagieren lässt und gegebenenfalls die Reste A′ und/oder X′ in Reste A und/oder X umwandelt.

Die Kondensation der Amine der Formel (4) mit den Benzochinonen der Formel (5) wird vorteilhaft in einem wässrigen oder wässrig-organischen Medium unter Zugabe alkalischer Kondensationsmittel bei pH-Werten von 3 bis 11, vorzugsweise 4 bis 8, und Temperaturen von 20 bis 100 °C, vorzugsweise 30 bis 60 °C oder in gepufferten Lösungen, die obige alkalische Kondensationsprodukte enthalten, durchgeführt. Man kann auch in einem rein organischen Milieu unter Zusatz säurebindender Mittel arbeiten.

Alkalische Kondensationsmittel sind z.B. Natriumhydrogencarbonat, Natriumcarbonat, Natrium- oder Kaliumacetat, Natriumhydroxid, Kaliumhydroxid, Natriumphosphate oder Natriumborat.

Die Verbindungen der Formel (4) sind neu und stellen einen weiteren Gegenstand der Erfindung dar.

Die Verbindungen der Formel (4), worin X′ -OH, B -O- und A′ ein Rest der zuvor angegebenen Formel (2a) sind, können in an sich bekannter Weise hergestellt werden, z.B. indem man ein Nitrophenol der Formel

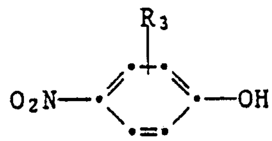

(8),

worin $R_3$ die zuvor angegebene Bedeutung hat, mit einer Halogenverbindung der Formel

$Hal-(CH_2)_m-OH$ (9),

worin Hal Halogen, besonders Chlor, bedeutet und m die zuvor angegebene Bedeutung hat, zur Etherverbindung der Formel

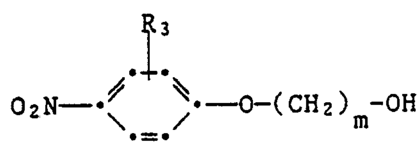

(10),

umsetzt, diese durch eine geeignete Chlorierungsreaktion, z.B. mit Thionylchlorid, in die entsprechende Chloralkanverbindung der Formel

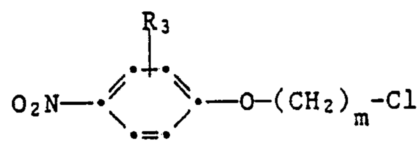

(11),

umwandelt, diese anschliessend mit 2-Mercaptoethanol zur Thioetherverbindug der Formel

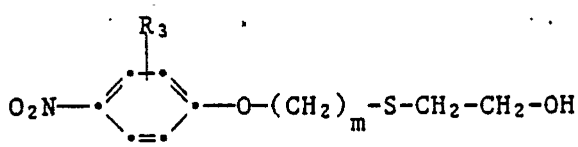

(12),

umsetzt, die erhaltene Verbindung zur Sulfonylverbindung oxidiert, die Nitrogruppe zur Aminogruppe reduziert, den Phenylrest in an sich bekannter Weise z.B. mit Oleum, sulfoniert und gegebenenfalls eine Abgangsgruppe, z.B. $-OSO_3H$, $-OCOCH_3$, $-SSO_3H$ oder $-OPO_3H_2$, einführt.

Die Oxidation der Thioetherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die Reduktion der Nitrogruppe zur Aminogruppe erfolgt in an sich bekannter Weise durch katalytische Hydrierung mit Pd/Kohlenstoff in Ethanol, Essigester oder Tetrahydrofuran bei Raumtemperatur bis etwa 40 °C. Die Reduktion kann auch mit Fe/Salzsäure oder Fe/Essigsäure in wässriger Lösung durchgeführt werden.

Die so erhältlichen Verbindungen der Formel (4), in denen die Gruppierung $-SO_2-Z$ eine ß-Hydroxyethylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte übergeführt werden, in denen die Gruppierung $-SO_2-Z$ z.B. die Gruppierung $-SO_2-CH_2-CH_2-O-SO_3H$, $-SO_2-CH_2-CH_2-O-$

$PO_3H_2$, $-SO_2-CH_2-CH_2$-Halogen, $-SO_2-CH_2-CH_2-O-CO-CH_3$ oder $-SO_2-CH_2-CH_2-O-CO-C_6H_5$ bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxid oder Natriumcarbonat, in entsprechende Verbindungen übergeführt werden, in denen die Gruppierung $-SO_2-Z$ die Gruppierung $-SO_2-CH=CH_2$ bedeutet. Die so erhaltenen Produkte können wiederum durch Umsetzung (Addition) mit Salzen der Thioschwefelsäure, wie Natriumthiosulfat, in Verbindungen übergeführt werden, in denen die Gruppierung $-SO_2-Z$ die Gruppierung $-SO_2-CH_2-CH_2-S-SO_3H$ bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta-oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Die Verbindungen der Formel (4), worin $X'$ -OH, B -O- und $A'$ ein Rest der zuvor angegebenen Formel (2b) sind, können erhalten werden, z.B. indem man eine Verbindung der zuvor angegebenen Formel (8) zunächst mit einer Verbindung der Formel

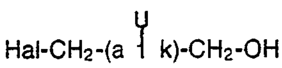 (9a)

umsetzt und im übrigen wie zuvor beschrieben verfährt.

Die Verbindungen der Formel (4), worin $X'$ -0H, B -O- und $A'$ ein Rest der zuvor angegebenen Formel (2c) bis (2h) ist, sind erhältlieh, z.B. indem man eine Verbindung der zuvor angegebenen Formel (8) mit einem Säurehalogenid der Formel

$Hal-(CH_2)_n-CO-Hal$ (9b),

worin Hal Halogen, besonders Chlor, bedeutet und n die zuvor angegebene Bedeutung hat, zur Verbindung der Formel

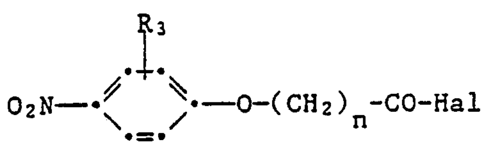 (13),

umsetzt, diese mit einem Amin der Formel

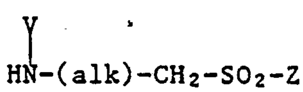 (2c*),

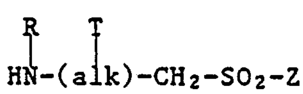 (2d*),

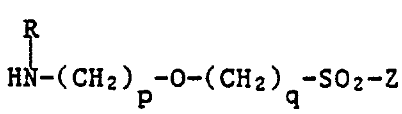 (2e*),

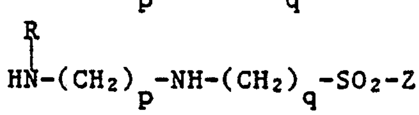 (2f*),

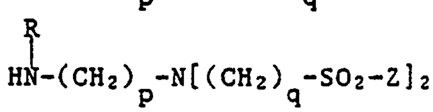 (2g*), oder

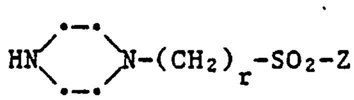 (2h*),

worin V, (alk), Z, R, T, p, q und r jeweils die zuvor angegebene Bedeutung haben, reagieren lässt, und anschliessend wie zuvor beschrieben die Nitrogruppe zur Aminogruppe reduziert, den Phenylrest sulfoniert

und gegebenenfalls eine Abgangsgruppe einführt.

Eine Variante des oben beschriebenen Verfahrens besteht darin, anstelle der Amine der Formeln (2c*) bis (2h*) geeignete Vorprodukte einzusetzen und diese nachträglich in die entsprechenden Amine umzuwandeln.

Geeignete Vorprodukte sind z.B. die den Formeln (2c*) bis (2h*) analogen Thioetheramine, die nach der Umsetzung mit einer Verbindung der Formel (13) in bekannter Weise zu den entsprechenden Sulfonen oxidiert werden können.

Es ist auch möglich, zunächst geeignete Halogenalkylamine mit dem Säurechlorid der Formel (13) reagieren zu lassen und die dabei erhaltenen Verbindungen mit 2-Mercaptoethanol und Natriumalkoholat in Alkohol zu den oben genannten Thioetheraminen umzusetzen, welche anschliessend wiederum zu den Sulfonen der Formeln (2c*) bis (2h*) oxidiert werden können.

Vorzugsweise werden solche Amine der Formeln (2c*) bis (2h*) bzw. deren Vorprodukte eingesetzt, welche eine Vorstufe des Reaktivrestes enthalten und dementsprechend Z z.B. einen Rest der Formel HO-$H_2C$-$H_2C$- darstellt. Die Vorstufe des Reaktivrestes wird dann nachträglich wie zuvor beschrieben in die Endstufe überführt.

Die Amine der Formeln (2c*) bis (2h*) bzw. deren Vorprodukte sind z.B. aus der EP-A 210 951 bekannt oder lassen sich analog dazu herstellen.

Die Umsetzung (Kondensation) des Säurechlorids der Formel (13) mit den vorgenannten Aminen erfolgt zum Beispiel in wässrigem, wässrig-organischem oder organischem Medium bei einer Temperatur zwischen etwa 0° und 120°C, vorzugsweise 10° bis 60°C, in Gegenwart von alkalischen säurebindenden Mitteln, z.B. Alkalimetallhydroxiden, -carbonaten oder -bicarbonaten.

Die Verbindungen der Formel (4), worin X′ -OH und B eine direkte Bindung bedeuten, können analog zu den entsprechenden Verbindungen mit B = -O- erhalten werden, wenn man anstelle der Verbindungen der zuvor angegebenen Formel (10) oder (13) die an sich bekannten Verbindungen der Formel

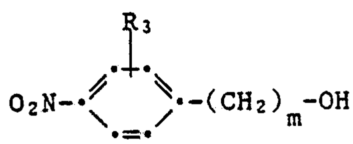

(10′),

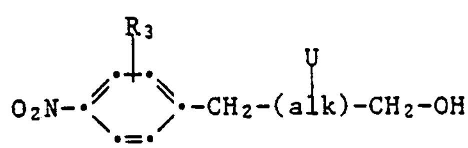

(10″), oder

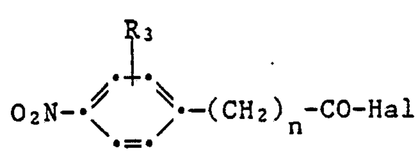

(13′),

worin $R_3$, U, Hal, (alk), m und n jeweils die zuvor angegebene Bedeutung haben, als Ausgangspunkte verwendet.

Die Verbindungen der Formel (4), worin X′ die zuvor angegebene Bedeutung von Z hat, B für den Rest -O- steht und A′ ein Rest der zuvor angegebenen Formel (3a), (3b) oder (3c) ist, können hergestellt werden, z.B. indem man eine Verbindung der Formel

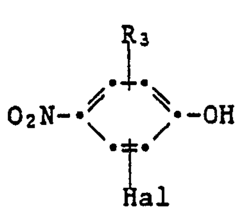

(14),

worin $R_3$ und Hal jeweils die zuvor angegebene Bedeutung haben, zunächst mit einer Haloalkylverbindung der Formel

$$Hal-(CH_2)_m-U' \quad (3a*),$$

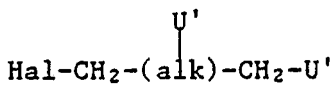

(3b*) oder

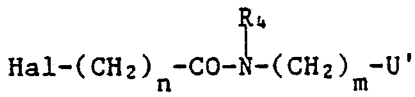

(3c*),

worin Hal, (alk), $R_4$, U′, n und m jeweils die zuvor angegebene Bedeutung haben, und dann mit 2-Mercaptoethanol umsetzt, die erhaltene Verbindung wie zuvor beschrieben zur Sulfonylverbindung oxidiert, die Nitrogruppe reduziert und gegebenenfalls eine der zuvor genannten Abgangsgruppen einführt.

Die Verbindungen der Formel (4), worin X′ die zuvor angegebene Bedeutung von Z hat, B eine direkte Bindung bedeutet und A′ ein Rest der zuvor angegebenen Formel (3a), (3b) oder (3c) ist, können in analoger Weise ausgehend von den an sich bekannten Verbindungen der Formel

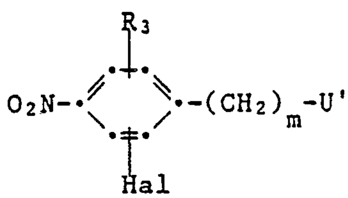

(14a),

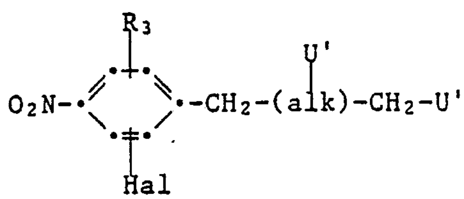

(14b), oder

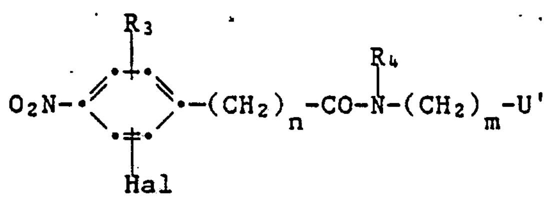

(14c)

erhalten werden.

Die Verbindungen der Formel (5) sind bekannt oder können nach an sich bekannten Methoden erhalten werden.

Der Ringschluss der Anilverbindung der Formel (6) zur Dioxazinverbindung kann nach an sich bekannten Methoden, insbesondere in konzentrierter Schwefelsäure und vor allem in Oleum mit $SO_3$-Gehalten von 1-50 Gew.-% bei Temperaturen von 10-80 °C, vorzugsweise 10 bis 50 °C, gegebenenfalls mit Zusatz von Oxidationsmitteln wie Kalium- oder Ammoniumperoxidisulfat, Braunstein oder organischen Peroxiden, vorgenommen werden.

Vorzugsweise werden in den Ausgangsprodukten vorhandene Hydroxyalkylreste, z.B. der ß-Hydroxyethylsulfonylrest, unter den beim Ringschluss angewandten Reaktionsbedingungen in die entsprechenden Sulfatoalkylreste umgewandelt; im Fall des ß-Sulfatoethylsulfonylrestes kann dieser gegebenenfalls nachträglich wie zuvor geschildert in die Vinylform oder in eine andere zuvor genannte Vorstufe des Vinylsulfonylrestes übergeführt werden.

Die wichtigsten Verfahrensvarianten sind in den Ausführungsbeispielen dargestellt.

Die erfindungsgemässen Farbstoffe der Formel (1) sind faserreaktiv. Unter faserreaktiven Farbstoffen sind solche zu verstehen, die mit den Hydroxylgruppen der Cellulose oder mit den reaktiven Zentren von natürlichen oder synthetischen Polyamiden unter Bildung kovalenter chemischer Bindungen zu reagieren vermögen.

Die erfindungsgemässen Reaktivfarbstoffe der Formel (1) eignen sich zum Färben und Bedrucken der verschiedensten Materialien, wie Seide, Leder, Wolle, Polyamidfasern und besonders cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die erfindungsgemässen Reaktivfarbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eins dispergierend wirkenden und die Diffusion der nicht fixierten Anteile fördernden Mittels gründlich gespült.

Die erfindungsgemässen Reaktivfarbstoffe zeichnen sich durch hohe Reaktivität, gutes Fixiervermögen und ein gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Reaktivfarbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin sehr gute Nassechtheitseigenschaften, wie Wasch-, Wasser-, Seewasser-, Ueberfärbe- und Schweissechtheiten, sowie eine gute Chlorechtheit, Plissierechtheit, Bügelechtheit und Reibechtheit. Hervorzuheben ist insbesondere die sehr gute Lichtechtheit der erfindungsgemässen Reaktivfarbstoffe.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumteilen im Verhältnis von Kilogramm zu Liter.

<u>Beispiel 1:</u>

76,2 Teile des Amins der Formel

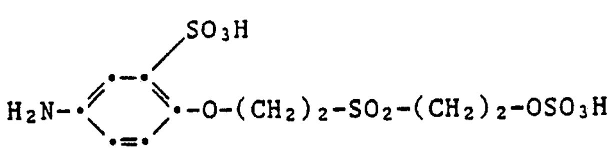

(15)

werden in 800 Teilen Wasser neutral gelöst. Man gibt 24,6 Teile 2,3,5,6-Tetrachlorchinon zu, erwärmt den Ansatz auf ca. 40° C und hält den pH-Wert während der nun folgenden Umsetzung durch Zugabe von Natriumhydroxidlösung auf 5,5 bis6,0. Am Schluss wird das Produkt mit Natriumchlorid ausgesalzen, abfiltriert und getrocknet; es entspricht der Formel

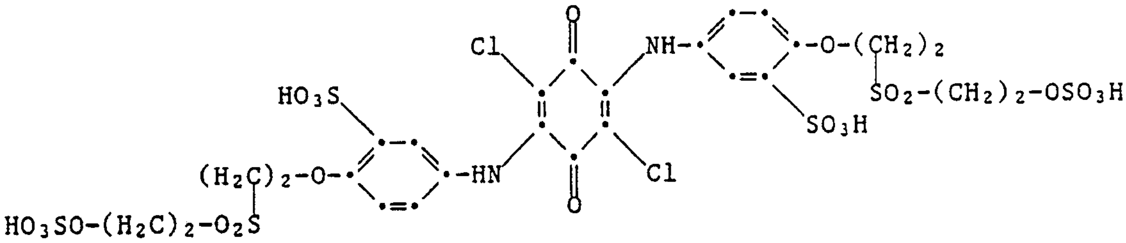

Beispiel 2:

103 Teile des gemäss Beispiel 1 erhaltenen Chloranilkondensationsproduktes werden bei 10 bis 20 °C innerhalb von ca. 1 Stunde in 200 Teile 20%iges Oleum eingetragen. Man lässt bis zur vollständigen Lösung nachrühren (ca. 30 bis 60 Minuten) und trägt dann innerhalb von ca. 45 Minuten 45 Teile Kaliumperoxidisulfat bei 20 bis 25 °C unter leichter Aussenkühlung in die dickflüssige Masse ein. Nach einem ca. einstündigen Nachrühren wird das Reaktionsgemisch auf Eis gegeben und die entstandene Lösung zunächst mit 7,5 Teilen Trinatriumphosphat und dann mit Natriumhydroxidlösung versetzt, bis ein pH-Wert von 4,5 bis 5,0 erreicht ist. Der ausgefallene Farbstoff wird abgesaugt, mit Natriumchloridlösung gewaschen und im Vakuum getrocknet; er entspricht der Formel

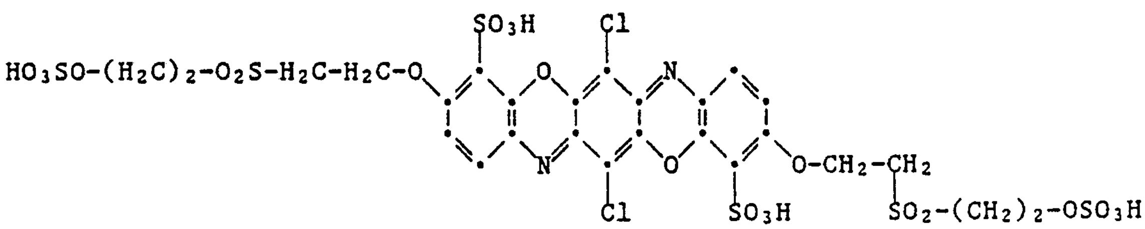

und färbt Baumwolle in kräftigen Rottönen mit ausgezeichneten Allgemeinechtheiten.

Beispiel 3 bis 15:

Verfährt man wie in den Beispielen 1 und 2 beschrieben und verwendet anstelle des Amins der Formel (15) die in der folgenden Tabelle aufgelisteten Amine, erhält man analoge Farbstoffe:

| Beispiel Nr. | Amin |
|---|---|
| 3 | 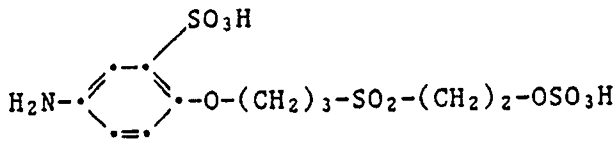 |
| 4 | 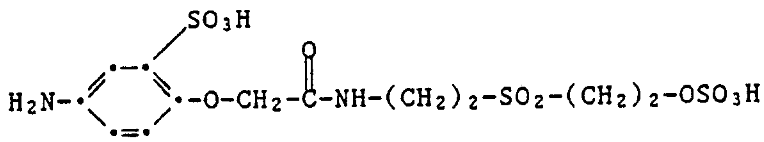 |
| 5 | 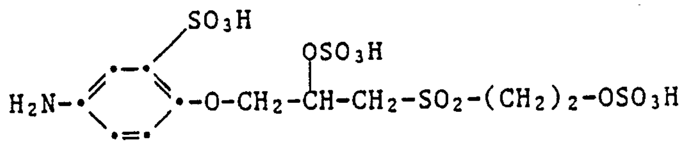 |
| 6 | 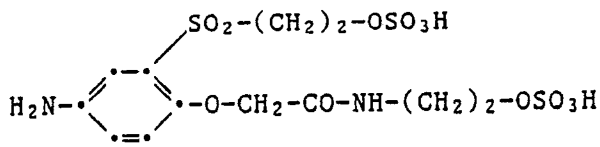 |
| 7 | 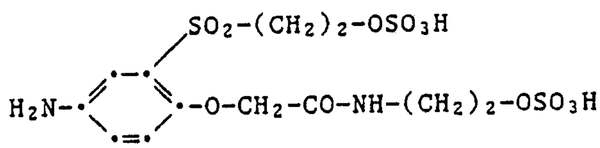 |
| 8 | 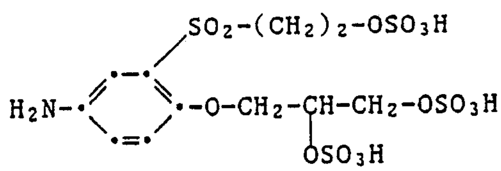 |
| 9 | 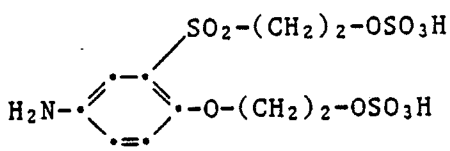 |
| 10 | 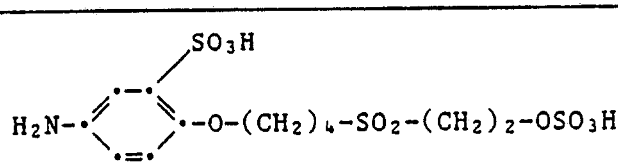 |
| 11 | 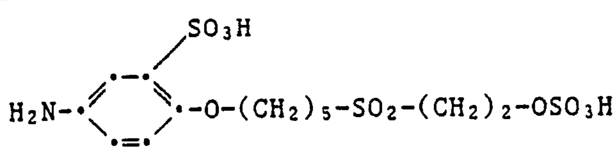 |

(Fortsetzung)

| Beispiel Nr. | Amin |
|---|---|
| 12 | 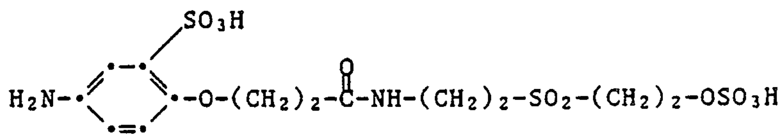 |
| 13 | 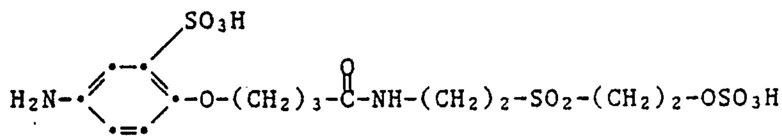 |
| 14 | 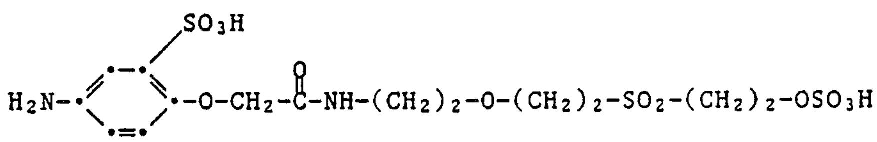 |
| 15 | 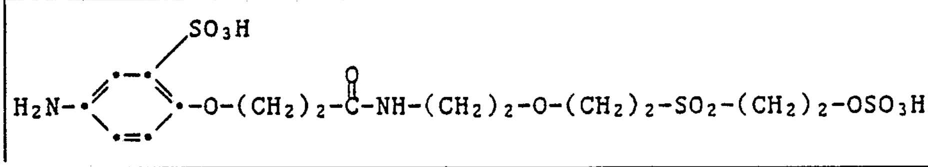 |

<u>Färbevorschrift I</u>

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40° C mit 100 Teilen eines Baumwollgewebes ein. Nach 45 Minuten werden 100 Teile einer Lösung, die pro Liter 16 g Natriumhydroxid und 20 g kalzinierte Soda enthält, zugegeben. Die Temperatur des Färbebades wird weitere 45 Minuten bei 40° C gehalten. Danach wird die gefärbte Ware gespült, während einer Viertelstunde mit einem nichtionogenen Waschmittel kochend geseift, nochmals gespült und getrocknet.

<u>Färbevorschrift II</u>

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35° C mit 100 Teilen eines Baumwollgewebes ein. Nach 20 Minuten werden 100 Teile einer Lösung, die pro Liter 16 g Natriumhydroxid und 20 g kalzinierte Soda enthält, zugegeben. Die Temperatur des Färbebades wird weitere 15 Minuten bei 35° C gehalten. Danach wird die Temperatur innerhalb von 20 Minuten von 60° C erhöht. Die Temperatur wird weitere 35 Minuten bei 60° C gehalten. Danach wird gespült, während einer Viertelstunde mit einem nichtionogenen Waschmittel kochend geseift, nochmals gespült und getrocknet.

<u>Färbevorschrift III</u>

8 Teile des gemäss Beispiel 1 erhaltenen Reaktivfarbstoffes werden in 400 Teilen Wasser gelöst; dazu

gibt man 1400 Teile einer Lösung, die pro Liter 100 g Natriumsulfat enthält. In dieses Färbebad geht man bei 25 °C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60 °C erhöht. Die Temperatur wird weitere 90 Minuten auf 60 °C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxid und 20 g kalzinierte Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxid und 0,04 Liter Wasserglas (38 °Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20 °C warmen Lösung, die pro Liter 4 g Natriumhydroxid und 300 g Natriumchlorid enthält, quetscht auf 75 % Gewichtszunahme ab, dämpft die Färbung während 30 Sekunden bei 100 bis 102 °C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102 °C in gesättigtem Dampf. Das bedruckte Gewebe wird dann gespült, gegebenenfalls kochend geseift und nochmals gespült, und anschliessend getrocknet.

## Ansprüche

1. Verbindungen der Formel

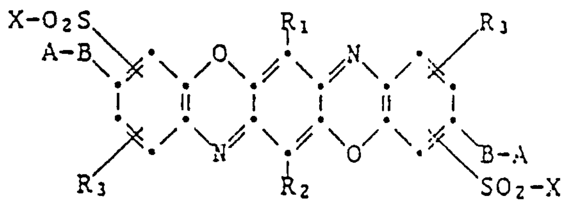

(1)

worin $R_1$, $R_2$ und $R_3$ unabhängig voneinander Wasserstoff oder ein Substituent sind, B eine direkte Bindung oder den Rest -O- bedeutet, X Hydroxy und A ein Rest der Formel

$-(CH_2)_m-SO_2-Z$ (2a),

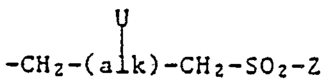

(2b),

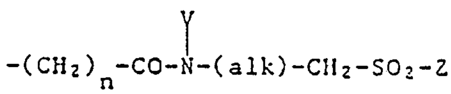

(2c),

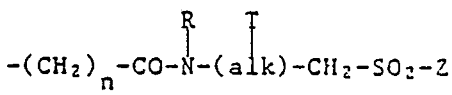

(2d),

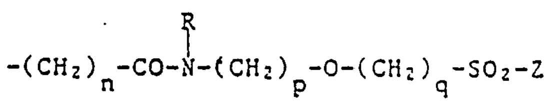

(2e),

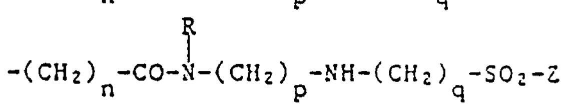

(2f),

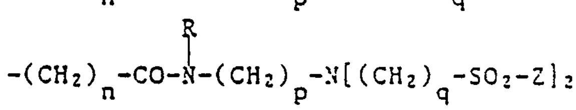

(2g) oder

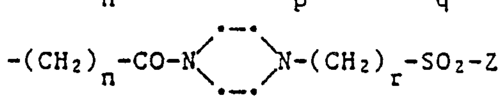

(2h),

worin U Hydroxy, Sulfato, Sulfo oder Halogen bedeutet, V Wasserstoff, gegebenenfalls substituiertes $C_1$-$C_4$-Alkyl oder ein Rest -(alk)-$CH_2$-$SO_2$-Z ist, (alk) für einen $C_1$-$C_6$-Alkylenrest steht, R Wasserstoff oder $C_1$-$C_6$-Alkyl bedeutet, T Wasserstoff, Halogen, Hydroxy, Sulfato, Carboxy, Cyano, $C_1$-$C_4$-Alkanoyloxy, $C_1$-$C_4$-Alkoxycarbonyl oder ein Rest -$SO_2$-Z ist, Z einen Rest der Formel -CH=$CH_2$ oder -$CH_2$-$CH_2$-Y bedeutet, Y eine Abgangsgruppe darstellt, m eine ganze Zahl von 2 bis 6 bedeutet und n, p, q und r unabhängig voneinander eine ganze Zahl von 1 bis 6 darstellen, sind, oder X die oben angegebene Bedeutung von Z hat und A ein Rest der Formel

$-(CH_2)_m-U'$ (3a),

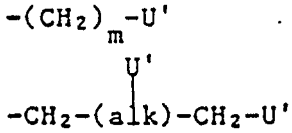

(3b) oder

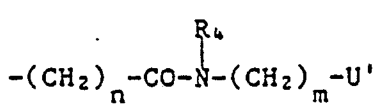

(3c),

worin $R_4$ Wasserstoff, $C_1$-$C_4$-Alkyl oder ein Rest $-(CH_2)_m-U'$ ist, $U'$ Hydroxy, Sulfo oder Sulfato bedeutet und (alk), n und m jeweils die zuvor angegebene Bedeutung haben, ist.

2. Verbindungen gemäss Anspruch 1, dadurch gekennzeichnet, dass $R_1$ und $R_2$ unabhängig voneinander Wasserstoff, Halogen, $C_1$-$C_4$-Alkyl, $C_1$-$C_4$-Alkoxy, Phenoxy, Carboxy, Carbamoyl oder $C_1$-$C_4$-Alkanoylamino sind und $R_3$ Wasserstoff, Sulfo, $C_1$-$C_4$-Alkyl, $C_1$-$C_4$-Alkoxy, Halogen, Carboxy, Carbamoyl, N-$C_1$-$C_4$-Alkyl- oder N,N-Di-$C_1$-$C_4$-Alkylcarbamoyl, $C_1$-$C_4$-Alkylsulfonyl, Sulfamoyl oder N-$C_1$-$C_4$-Alkyl- oder N,N-Di-$C_1$-$C_4$-Alkylsulfamoyl bedeutet.

3. Verbindungen gemäss Anspruch 1 oder 2, dadurch gekennzeichnet, dass $R_1$ und $R_2$ jeweils Wasserstoff, Methyl, Methoxy, Acetylamino oder Chlor, besonders Chlor, sind und $R_3$ Wasserstoff, Chlor, $C_1$-$C_4$-Alkyl oder $C_1$-$C_4$-Alkoxy, besonders Wasserstoff, bedeutet.

4. Verbindungen gemäss Anspruch 1, dadurch gekennzeichnet, dass $R_1$ und $R_2$ jeweils Chlor, $R_3$ Wasserstoff und B den Rest -O- bedeuten.

5. Verbindungen gemäss einem der Ansprüche 1 bis 4, dadurch gekennzeichnet, dass X Hydroxy und A ein Rest der im Anspruch 1 angegebenen Formel (2a) bis (2h) ist.

6. Verbindungen gemäss einem der Ansprüche 1 bis 5, dadurch gekennzeichnet, dass X Hydroxy und A ein Rest der Formel

$-(CH_2)_{2-5}-SO_2-Z'$ (2a'),

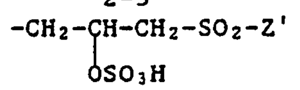 (2b'),

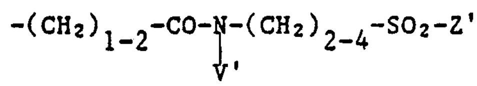 (2c'),

$-(CH_2)_{1-2}-CO-NH-CH_2-CH_2-O-CH_2-CH_2-SO_2-Z'$ (2e'),

$-(CH_2)_{1-2}-CO-NH-CH_2-CH_2-NH-CH_2-CH_2-SO_2-Z'$ (2f') oder

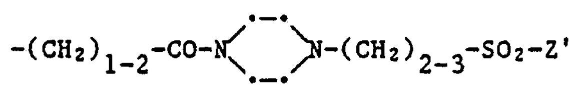 (2h'),

worin $V'$ Wasserstoff, Methyl, Ethyl oder einen Rest
$-(CH_2)_{2-4}-SO_2-Z'$
bedeutet, $Z'$ für $-CH=CH_2$ oder $-CH_2-CH_2-Y'$ steht und $Y'$ $-OSO_3H$, $-SSO_3H$, $-OCOCH_3$, $OPO_3H_2$ oder -Cl bedeutet.

7. Verbindungen gemäss einem der Ansprüche 1 bis 6, dadurch gekennzeichnet, dass X Hydroxy und A ein Rest

$-(CH_2)_2-SO_2-(CH_2)_2-OSO_3H$,

$-(CH_2)_3-SO_2-(CH_2)_2-OSO_3H$,

$-(CH_2)_4-SO_2-(CH_2)_2-OSO_3H$,

$-(CH_2)_5-SO_2-(CH_2)_2-OSO_3H$,

$-CH_2-CO-NH-(CH_2)_2-SO_2-(CH_2)_2-OSO_3H$ oder

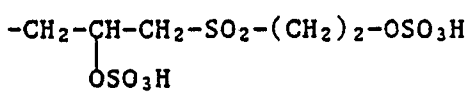

ist.

8. Verbindungen gemäss einem der Ansprüche 1 bis 4, dadurch gekennzeichnet, dass X die im Anspruch 1 angegebene Bedeutung von Z hat und A ein Rest der im Anspruch 1 angegebenen Formel (3a) bis (3c) ist.

9. Verbindungen gemäss einem der Anspüche 1 bis 4 oder 8, dadurch gekennzeichnet, dass X die im Anspruch 1 angegebene Bedeutung von Z hat und A ein Rest der Formel

$-(CH_2)_{2-4}-OSO_3H$ (3a'),

$-CH_2-\underset{\displaystyle OSO_3H}{(alk)}-CH_2-OSO_3H$ (3b') oder

$-(CH_2)_{1-2}-CO-\overset{\displaystyle R_4'}{N}-(CH_2)_{2-4}-OSO_3H$ (3c'),

worin (alk) Methylen oder Ethylen ist und $R_4'$ für Wasserstoff oder einen Rest $-(CH_2)_{2-4}-OSO_3H$ steht, ist.

10. Verbindungen gemäss Anspruch 9, dadurch gekennzeichnet, dass A ein Rest

$-CH_2-CH_2-OSO_3H$,

$-CH_2-\underset{\displaystyle OSO_3H}{CH}-CH_2-OSO_3H$,

$-CH_2-CO-NH-CH_2-CH_2-OSO_3H$,

$-CH_2-CH_2-CO-NH-CH_2-CH_2-OSO_3H$ oder

$-CH_2-CO-N\ (CH_2-CH_2-OSO_3H)_2$

ist.

11. Verbindungen der Formel (1) gemäss Anspruch 1, worin $R_1$ und $R_2$ jeweils Chlor und $R_3$ Wasserstoff sind, B für den Rest -O- steht, X Hydroxy bedeutet und A für einen Rest der im Anspruch 6 angegebene Formel (2a'), (2b'), (2c'), (2e'), (2f') oder (2h') steht, oder X die im Anspruch 6 angegebene Bedeutung von Z' hat und A einen Rest der im Anspruch 9 angegebenen Formel (3a'), (3b') oder (3c') darstellt.

12. Verbindungen der Formel (1) gemäss Anspruch 1, worin $R_1$ und $R_2$ jeweils Chlor und $R_3$ Wasserstoff sind, B den Rest -O- darstellt, X Hydroxy und A einen Rest

$-(CH_2)_2-SO_2-(CH_2)_2-OSO_3H$,

$-(CH_2)_3-SO_2-(CH_2)_2-OSO_3H$,

$-(CH_2)_4-SO_2-(CH_2)_2-OSO_3H$,

$-(CH_2)_5-SO_2-(CH_2)_2-OSO_3H$,

$-CH_2-CO-NH-(CH_2)_2-SO_2-(CH_2)_2-OSO_3H$ oder

$-CH_2-\underset{\displaystyle OSO_3H}{CH}-CH_2-SO_2-(CH_2)_2-OSO_3H$

bedeuten, oder X $-CH_2-CH_2-OSO_3H$ und A einen Rest

$-CH_2-CH_2-OSO_3H$,

$-CH_2-\underset{\displaystyle OSO_3H}{CH}-CH_2-OSO_3H$,

$-CH_2-CO-NH-CH_2-CH_2-OSO_3H$,

$-CH_2-CH_2-CO-NH-CH_2-CH_2-OSO_3H$ oder

$-CH_2-CO-N\ (CH_2-CH_2-OSO_3H)_2$

darstellen.

13. Verfahren zur Herstellung von Verbindungen der Formel (1), dadurch gekennzeichnet, dass man ein Amin der Formel

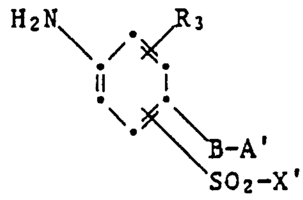

(4),

worin $R_3$ und B die im Anspruch 1 angegebene Bedeutung haben, $A'$ die im Anspruch 1 angegebene Bedeutung von A hat oder für einen Rest der im Anspruch 1 angegebenen Formel (2a) bis (2h), worin Z $-CH_2-CH_2-OH$ ist, steht und $X'$ die im Anspruch 1 angegebene Bedeutung von X hat oder für den Rest $-CH_2-CH_2-OH$ steht, mit einem 1,4-Benzochinon der Formel

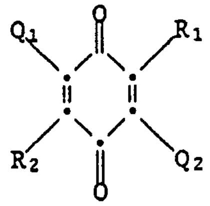

(5),

worin $R_1$ und $R_2$ die im Anspruch 1 angegebene Bedeutung haben und $Q_1$ und $Q_2$ jeweils Wasserstoff, Chlor, Brom, $C_1$-$C_4$-Alkoxy oder Phenoxy bedeuten, zu einer Verbindung der Formel

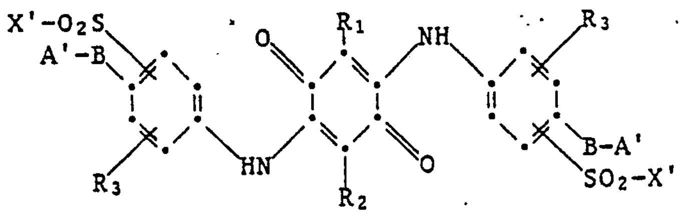

(6)

kondensiert, die erhaltene Anilverbindung durch nachfolgenden Ringschluss zur Dioxazinverbindung reagieren lässt und gegebenenfalls die Reste $A'$ und/oder $X'$ in Reste A und/oder X umwandelt.

14. Verwendung der Verbindungen der Formel (1) als Reaktivfarbstoffe zum Färben und Bedrucken von cellulosehaltigen Fasermaterialien.

15. Verwendung gemäss Anspruch 14 zum Färben und Bedrucken von Baumwolle.

16. Verbindungen der Formel

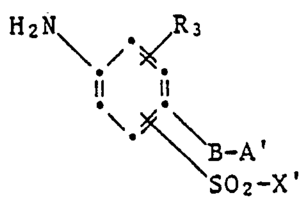

(4),

worin $R_3$, B, $A'$ und $X'$ jeweils die im Anspruch 13 angegebene Bedeutung haben.

Europäisches Patentamt

# EUROPÄISCHER RECHERCHENBERICHT

Nummer der Anmeldung

EP 89 81 0776

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 153 599 (BAYER)<br>* Ansprüche 1,4,5,6,7 *<br>--- | 1-4,8-16 | C 09 B 62/503<br>C 07 C 317/36<br>D 06 P 1/384 |
| X | EP-A-0 245 603 (BAYER)<br>* Ansprüche 1,2; Beispiel 8; Seite 3, Zeile 28 - Seite 4, Zeile 5 *<br>----- | 1-4,8-16 | |
| | | | **RECHERCHIERTE SACHGEBIETE (Int. Cl.5)** |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 19-12-1989 | GINESTET M.E.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)